# EUROPÄISCHE PATENTSCHRIFT

(11) **EP 3 450 817 B1**
(45) Veröffentlichungstag und Bekanntmachung des Hinweises auf die Patenterteilung: **25.09.2019**
(21) Anmeldenummer: 18169387.0
(22) Anmeldetag: 26.04.2018
(51) Int. Cl.: F16P 1/02, B65C 9/40, B67C 3/00

(54) **BEHÄLTERBEHANDLUNGSANLAGE**
CONTAINER TREATMENT ASSEMBLY
INSTALLATION DE TRAITEMENT DES RÉCIPIENTS

(30) Priorität: 04.09.2017 DE 102017215467
(43) Veröffentlichungstag der Anmeldung: 06.03.2019
(73) Patentinhaber: KRONES AG, 93073 Neutraubling (DE)
(72) Erfinder: Kraus, Andreas, 93073 Neutraubling (DE); Scherl, Stefan, 93073 Neutraubling (DE)
(74) Vertreter: Grünecker Patent- und Rechtsanwälte PartG mbB

(56) Entgegenhaltungen:
- WO-A1-02/45904
- DE-A1- 19 757 729
- DE-A1-102012 200 642
- DE-U1-202004 000 506

## Beschreibung

Die Erfindung betrifft eine Behälterbehandlungsanlage umfassend einen Maschinenbereich, der zumindest teilweise durch eine Verschutzung eingehaust ist, und ein durch eine Öffnung in der Verschutzung hindurch mit dem Maschinenbereich zusammenarbeitendes Aggregat, wobei die Aggregatsposition gegenüber dem Maschinenbereich höhenverstellbar und/oder seitlich verstellbar ist.

Behälterbehandlungsanlagen, wie z.B. aus DE202004000506U1 bekannt, sind häufig modular angeordnet und umfassen zumindest eine Behälterbehandlungsmaschine, die beispielsweise in Form eines Rundläufers, wie zum Beispiel einer Etikettiermaschine oder auch Direktdruckmaschine ausgebildet sein kann. Bei Behälterbehandlungsmaschinen, ist zur Gewährleistung der Betriebssicherheit üblicherweise eine Verschutzung (auch Hebeschutz genannt) vorgesehen, bei Rundläufern typischerweise am Umfang der Maschine. Dieser Schutz soll verhindern, dass ein Benutzer im Betrieb in den Arbeitsbereich der Maschine (im Folgenden auch als Maschinenbereich bezeichnet), zum Beispiel in den Rotorumfang, greift und sich verletzt.

Bei modularen Anlagen, an die Aggregate und Anbauten angebracht werden, ist es häufig erforderlich, Öffnungen bzw. Ausschnitte in der Verschutzung vorzusehen, durch die Aggregate oder Anbauten hindurch in den Arbeitsbereich der Maschine (Maschinenbereich) ragen.

Diese Öffnungen sind typischerweise größer gewählt, als für das Aggregat jeweils nötig wäre, damit die Position des Aggregats an der Maschine nach Montage des Aggregats noch angepasst werden kann. Dadurch ergeben sich jedoch zwangsläufig Spalte, die keine Abdeckung haben und ein Benutzer könnte möglicherweise durch diese Spalte in den Arbeitsbereich greifen.

Wenn Aggregate beim Anbau positionsfest angebracht werden und anschließend nicht mehr bewegt werden, können verbleibende Spalte, bei der Installation bzw. Endmontage beispielsweise mit Plexiglas abgedeckt und ggf. abgedichtet werden. Das bedeutet jedoch auch, dass anschließend an dem Aufbau keine Positionsverstellung des Aggregats mehr möglich ist, außer man nimmt einen aufwändigen Umbau vor.

Tatsächlich ist die Möglichkeit, die Position auch nach der Endmontage noch mit wenig Aufwand zu verändern jedoch wünschenswert, weil beispielsweise eine Höhenverstellung oder auch eine seitliche Verstellung der Aggregatsposition zum Anpassen an verschiedene Arbeitsprozesse die Flexibilität erhöht. Dies betrifft besonders Aggregate zur Behälterausrichtung, beispielsweise in Etikettiermaschinen, welche je nach Prozess auf unterschiedlichen Höhen eingesetzt werden.

Vorzugsweise sind solche Aggregate an einem Rahmen, Gestell oder Ähnlichem so angebracht, dass sie verschiebbar sind, beispielsweise entlang von Stangen oder Schienen. Das erfordert jedoch, wie oben bereits angedeutet, dass die Öffnung für das Aggregat größer gewählt wird als für das Aggregat als solche nötig wäre, um das Verstellen zu ermöglichen und vor allem, damit vermieden wird, dass beim Verstellen das Aggregat mit der Verschutzung kollidiert. So sind bei einem derartigen flexiblen Aufbau Spalte unvermeidbar.

Für eine solche flexible Anordnung gibt es bislang keine Lösung, außer den gesamten Aufbau nochmals vollständig durch einen freistehenden Schutz zu versehen. Das ist jedoch teuer, aufwändig, schlecht nutzbar und braucht viel Platz.

Der Erfindung liegt die Aufgabe zu Grunde, eine Behälterbehandlungsanlage bereitzustellen, die einen flexiblen Einsatz der Anlage durch einfache Anpassung an verschiedene Arbeitsprozesse erlaubt, ohne dabei die Betriebssicherheit zu reduzieren.

Die Aufgabe wird durch den Gegenstand des Anspruchs 1 gelöst. Die Behälterbehandlungsanlage umfasst einen Maschinenbereich, der zumindest teilweise durch eine Verschutzung eingehaust ist, und ein durch eine Öffnung in der Verschutzung hindurch mit dem Maschinenbereich zusammenarbeitendes Aggregat, wobei die Aggregatsposition gegenüber dem Maschinenbereich höhenverstellbar und/oder seitlich verstellbar ist. Die Behälterbehandlungsmaschine umfasst eine Rollbandabdeckung umfassend mindestens ein Rollband, mit dem die Öffnung abdeckbar ist.

Das Aggregat in der vorliegenden Anlage kann also beliebig verschoben bzw. neu positioniert werden. Daher kann die Anlage flexibel eingesetzt werden, insbesondere für verschieden Arbeitsprozesse passend angepasst werden. So kann zum Beispiel eine Höhenverstellung des Aggregats vorgenommen werden, wenn das Umstellen auf einen anderen Arbeitsprozess dies erfordert. Die Rollbandabdeckung ist dabei so ausgebildet, dass die Öffnung unabhängig von der Aggregatsposition abgedeckt ist. Die Betriebssicherheit kann also gewahrt werden, weil durch die Rollbandabdeckung verhindert wird, dass Benutzer durch die Öffnung in der Verschutzung greifen, ohne dass dazu ein Umbau notwendig ist. Durch die Rollbandabdeckung können Spalte auch ohne Umbau abgedeckt werden.

Bei der Behälterbehandlungsanlage (im Folgenden auch "Anlage") kann es sich um eine modulare Behälterbehandlungsanlage handeln, die eine Behälterbehandlungsmaschine (im Folgenden auch "Maschine"), beispielsweise einen Rundläufer oder eine Linearmaschine, umfasst. Zum Beispiel kann die Maschine in Form einer Etikettiermaschine oder auch Direktdruckmaschine ausgebildet sein. Die Maschine kann dabei der Teil der Anlage sein, der die Hauptfunktion ausführt, beispielsweise das Etikettieren oder das Bedrucken. Der Arbeitsbereich oder Maschinenbereich ist dabei der Bereich, in dem die Maschine ihre Funktion ausführt. Die Maschine kann beispielsweise Elemente für den Behältertransport wie Karussells, sowie Walzen, Druckköpfe oder Etikettierer umfassen. Alternativ können manche dieser Elemente als Aggregate vorgesehen sein. Bei den Behältern kann es sich beispielsweise um Flaschen verschiedener Form oder verschließbare Gläser handeln.

Weiterhin umfasst die Anlage mindestens ein Aggregat. Aggregate sind typischerweise Maschinen, die eigenständig Funktionen ausführen, beispielsweise eine Behälterausrichtung oder Behälterinspektion und nicht fest mit der Maschine verbaut sind. Aggregate können dann für den Betrieb derart angebracht werden, dass sie mit dem Maschinenbereich zusammenarbeiten können. Das heißt, dass sie eine bestimmte Position und Ausrichtung gegenüber dem Maschinenbereich haben, die erlaubt, dass sie Behälter, die mittels Maschine im Maschinenbereich bearbeitet werden, ebenfalls bearbeiten können, wobei ihre Funktion mit der Funktion der Maschine zusammenhängt. Beispielsweise könnte das Aggregat ein Aggregat zur Behälterausrichtung sein, also ein Aggregat, welches die Ausrichtung der Behälter so anpasst, dass die Maschine die Behälter geeignet verarbeiten kann.

Es versteht sich, dass für die vorliegende Anmeldung von einem Aggregat ausgegangen wird, das bereits für den Betrieb an dem Maschinenbereich angeordnet ist. Das Aggregat kann an einem Rahmen, Gestell, oder Ähnlichem angebracht sein und das Gestell oder der Rahmen können dazu dienen, das Aggregat am Maschinenbereich anzuordnen. Beispielsweise kann das Aggregat einfach aufgestellt werden. Das Aggregat selbst ist auch nach der Anordnung am Maschinenbereich noch beweglich angeordnet, beispielsweise beweglich sowohl bezüglich des Maschinenbereichs als auch bezüglich des Rahmens oder Gestells. Beispielsweise kann das Aggregat verschiebbar angeordnet sein, insbesondere entlang von Stangen oder Schienen. Diese Stangen oder Schienen können Teil des Rahmens oder Gestells sein oder an diesen befestigt sein. Das Aggregat kann höhenverstellbar und seitlich verstellbar sein. Das heißt, dass es beispielsweise in vertikaler Richtung verschiebbar und/oder seitlich, insbesondere in einer Richtung entlang der Verschutzung, verschiebbar sein kann.

Wie oben erläutert, umfasst die Anlage die Verschutzung. Diese kann in Form von Scheiben, beispielsweise Plexiglasscheiben, ausgebildet sein. Dass der Maschinenbereich durch die Verschutzung zumindest teilweise eingehaust ist, kann beispielsweise erreicht werden, indem die Verschutzung um den gesamten Umfang der Maschine herum aufgebaut ist und die Maschine vor Zugriffen durch Benutzer schützt. Dabei ist denkbar, dass die Anlage an andere Anlagen und/oder Aggregate angrenzt und mit diesen wechselwirkt, so dass hier die Verschutzung durchbrochen ist. Auch nach oben unmittelbar an einer Wand muss je nach Anlage die Verschutzung nicht zwangsläufig abgeschlossen sein, soweit ausreichend gewährleistet ist, dass Benutzer hier nicht eingreifen können.

Damit ein Zusammenarbeiten des Aggregats mit dem Maschinenbereich möglich ist, ist eine Öffnung in der Verschutzung vorgesehen. Die Öffnung kann in Form eines Ausschnitts in der Verschutzung ausgebildet sein. Das Aggregat ragt also durch eine Öffnung in der Verschutzung in einen Bereich innerhalb der Verschutzung hinein. Die Öffnung kann derart ausgebildet ist, dass das Aggregat ohne Kollision mit der Verschutzung in bestimmte Aggregatspositionen bewegbar ist. Beispielsweise kann durch die Elemente entlang derer das Aggregat bewegbar ist, beispielsweise Schienen oder Stangen, und/oder durch entsprechende Stopper, die die Bewegung des Aggregats auf einen bestimmten Bereich begrenzen, ein bestimmtes Maß an Bewegung vorgegeben sein. Die Öffnung ist vorzugsweise derart ausgebildet, dass das Aggregat mindestens in diesem Maß beweglich ist, ohne mit der Verschutzung zu kollidieren.

Wenn in dieser Anmeldung davon gesprochen wird, dass die Öffnung durch die Rollbandabdeckung bzw. das Rollband abgedeckt wird, so ist selbstverständlich der Bereich der Öffnung gemeint, der nicht vom Aggregat bedeckt ist, also ein verbleibender Bereich der Öffnung. Dieser verbleibende Bereich kann beispielsweise ein oder mehrere Spalte zwischen dem Aggregat und der Verschutzung umfassen. Beispielsweise kann, im Fall einer im Wesentlichen rechteckigen Öffnung und eines im Wesentlichen rechteckigen Aggregats, oberhalb, unterhalb, links und/oder rechts vom Aggregat ein Spalt verbleiben. Weiterhin sei angemerkt, dass unter den Begriff "Abdecken der Öffnung" ein vollständiges Abdecken (auch "Verschließen") der Öffnung fällt, jedoch auch, dass ein Teilbereich, beispielsweise einer der Spalte der Öffnung, mit einem Abrollband zugedeckt wird.

Die Rollbandabdeckung umfasst mindestens ein Rollband. Dieses kann beispielsweise in Form eines Kunststoffbandes, eines Metallbandes, insbesondere Stahlbandes, oder in Form eines Lammellenbandes oder Kettenbandes ausgebildet sein oder eine Mischform darstellen, solange es aufrollbar und abrollbar ist. Beispielsweise könnte ein Kunststoffband längs zur Abrollrichtung Stäbe zur Verstärkung aufweisen oder Lamellen können über Kettenglieder gekoppelt sein.

Die Rollbandabdeckung kann eine Rolle umfassen, auf der zumindest ein Teil des Rollbandes aufgerollt ist. Die Rolle kann derart ausgebildet sein, dass das Rollband auf bzw. von der Rolle auf- und abrollbar ist. Die Rolle kann insbesondere mit einer Feder vorgespannt sein. Die Rolle kann in einem Gehäuse angeordnet sein. Die Richtung, in der das Rollband von der Rolle abgerollt wird, wird im Folgenden als Abrollrichtung bezeichnet. Eine ausreichende Zugkraft in dieser Richtung rollt das Rollband von der Rolle ab. Die Rollbandabdeckung kann zudem mindestens eine Umlenkrolle umfassen, die dazu ausgebildet ist, das Band in die gewünschte Arbeitslage zu bringen. Dies ist vorteilhaft, wenn bestimmte Beschränkungen bezüglich der Position und Ausrichtung beim Anbringen der Rolle vorliegen.

Die Rollbandabdeckung kann derart ausgebildet sein, dass die durch das Rollband abgedeckte Fläche durch Aufrollen oder Abrollen des Rollbandes auf bzw. von der Rolle einstellbar ist. Ein solches Aufrollen und Abrollen sorgt dafür, dass stets ausreichend Abdeckmaterial leicht zugänglich vorhanden ist und auf einfache Art und Weise über die Öffnung gebracht werden kann. Zugleich ermöglicht dies auch, dass das Abdeckmaterial platzsparend untergebracht ist.

Die Rollbandabdeckung kann derart ausgebildet sein, dass das Rollband beim Verstellen der Aggregatsposition von einer ersten in eine zweite Aggregatsposition automatisch derart aufgerollt oder abgerollt wird, dass die Fläche eines abgerollten Teils des Rollbandes an die veränderte Fläche der Öffnung, in der zweiten Aggregatsposition angepasst wird. Dabei ist mit der veränderten Fläche eine veränderte Form der Fläche gemeint, beispielsweise veränderte Maße verschiedener Teilflächen (zum Beispiel über und unter bzw. links und rechts von dem Aggregat). Mit anderen Worten kann die Rollbandabdeckung so ausgebildet sein, dass sich die Rollbandabdeckung automatisch den neuen Maßen der Spalte anpasst. Somit ist es möglich, dass ohne Zutun des Benutzers automatisch die Spalte abdeckt werden und somit die Sicherheit gewährleistet wird.

Das Rollband umfasst eine Kante bzw. ein Ende, die bzw. das quer zur Abrollrichtung verläuft und, wenn das Rollband abgerollt ist, der Rolle gegenüberliegt, im Folgenden auch als Befestigungsende des Rollbandes bezeichnet. Entweder die Rolle oder das Befestigungsende sind am Aggregat befestigt. Insbesondere ist entweder das Befestigungsende am Aggregat befestigt und die Rolle an einem bezüglich des Aggregats feststehenden Bauteil (im Folgenden einfach mit "feststehendes Bauteil" abgekürzt) oder die Rolle ist am Aggregat befestigt und das Befestigungsende an einem feststehenden Bauteil. Das feststehende Bauteil kann beispielsweise ein Gehäuse, Gestell, oder einen Rahmen, insbesondere ein Gestell oder Rahmen, an dem das Aggregat angebracht ist, oder die Verschutzung umfassen.

Wie unten noch erläutert wird, können die Rolle bzw. das Befestigungsende, wenn sie an dem feststehenden Bauteil angebracht sind, daran derart angebracht sein, dass sie in einer Richtung parallel zur Abrollrichtung ortsfest und in einer Richtung im Wesentlichen senkrecht zur Abrollrichtung, insbesondere einer bezogen auf die Rolle seitlichen Richtung (wobei eine seitliche Richtung im Wesentlichen senkrecht zur Abrollrichtung und im Wesentlichen parallel zur Rollachse der Rolle verläuft), bewegbar, insbesondere verschiebbar angeordnet sind. Das feststehende Bauteil kann dazu beispielsweise Führungen, beispielsweise Schienen oder Stangen, zum Bewegen der Rolle bzw. des Befestigungsendes aufweisen.

Insbesondere kann die Rollbandabdeckung die Rolle umfassen, auf der zumindest ein Teil des Rollbandes aufgerollt ist und ein Befestigungsende des Rollbandes kann an dem Aggregat befestigt sein und die Rolle bezüglich einer Abrollrichtung des Rollbandes ortsfest an einem feststehenden Bauteil angebracht sein, derart, dass bei einem Vergrößern des Abstands des Aggregats von der Rolle das Rollband von der Rolle abgerollt wird. Alternativ kann die Rolle an dem Aggregat befestigt sein und ein Befestigungsende des Rollbandes bezüglich einer Abrollrichtung des Rollbandes ortsfest an einem feststehenden Bauteil angebracht sein, derart, dass bei einem Vergrößern des Abstands des Aggregats von dem Befestigungsende das Rollband von der Rolle abgerollt wird.

Wenn die Rolle bzw. das Befestigungsende (an dem feststehenden Teil) bezüglich der Abrollrichtung fest angeordnet ist, ergibt sich alleine dadurch, dass das Aggregat, wenn es in Abrollrichtung verschoben wird, an einem Ende des Rollbandes zieht und es dadurch abrollt, eine automatische Anpassung an den Spalt.

Die Rolle bzw. das Befestigungsende kann in mindestens einer Richtung senkrecht zu der Abrollrichtung, insbesondere einer seitlichen Richtung, verschiebbar an dem feststehenden Bauteil angebracht sein. Die Rolle bzw. das Befestigungsende kann insbesondere parallel zu einer Bewegungsrichtung des Aggregats verschiebbar an dem feststehenden Bauteil angebracht sein.

Wenn das Aggregat in zwei, beispielsweise senkrecht zueinander verlaufende, Richtungen verschiebbar ist kann durch die seitlich verschiebbare Rolle bzw. das seitlich verschiebbare Befestigungsende sichergestellt werden, dass es keine seitlichen Zugkräfte auf die Rollbandabdeckung gibt. Somit wird sichergestellt, dass das Auf- und Abrollen problemlos funktioniert und keine übermäßigen Materialbelastungen auftreten. Das kann zwar zur Folge haben, dass kein vollständiger Verschluss der Öffnung erfolgt (wie unten im Detail erläutert wird). Dafür muss die Befestigung des Rollbandes an dem Aggregat nicht gelöst und neu vorgenommen werden.

Die Rollbandabdeckung kann insbesondere derart ausgebildet und angeordnet sein, dass die Rolle bzw. das Befestigungsende bei Verschieben des Aggregats senkrecht zur Abrollrichtung des Rollbandes, insbesondere in einer seitlichen Richtung, automatisch in die gleiche Richtung wie das Aggregat verschoben wird, insbesondere durch einen (gegebenenfalls angesteuerten) Antrieb oder durch eine mechanische Koppelung. Wenn die Rolle bzw. das Befestigungsende automatisch verschoben wird, muss der Benutzer beim umstellen der Aggregatsposition nicht darauf achten, die Rollen bzw. Befestigungsenden geeignet neu zu positionieren. Eine mechanische Koppelung sorgt auf einfache Weise dafür, dass die Ausrichtung der Rollen bzw. Befestigungsenden zum Aggregat immer gleich bleibt. Gegebenenfalls kann bei einer starren mechanischen Koppelung auch auf ein Arretierungselement für die Rolle bzw. das Befestigungsende verzichtet werden. Mit einer Steuerung kann ebenfalls eine geeignete Ausrichtung hergestellt werden, und diese Möglichkeit ist besonders vorteilhaft, wenn, beispielsweise wegen der Geometrie oder dem Aufbau, eine mechanische Koppelung nicht wünschenswert ist. Es ist jedoch auch möglich, dass das Verschieben der Rolle bzw. des Befestigungsendes manuell durchgeführt wird, so dass die Vorrichtung selbst weniger Teile umfasst und einfacher ausgebildet ist.

Die Behälterbehandlungsanlage kann einen Arretiermechanismus umfassen, der zum Arretieren der Rolle bzw. des Befestigungsendes in der Richtung senkrecht zu der Abrollrichtung, insbesondere einer seitlichen Richtung, ausgebildet ist. Dieser ermöglicht, dass die verschiebbare Rolle bzw. das verschiebbare Befestigungsende sich nicht unkontrolliert verschiebt, nachdem sie/es in die vorgesehene Position gebracht wurde. Insbesondere bei einer fehlenden oder nicht besonders starken mechanischen Koppelung einer verschiebbaren Rolle bzw. eines verschiebbaren Befestigungsendes an das Aggregat ist eine solche Arretierung vorteilhaft.

Die Rolle kann eine Feder aufweisen, die derart ausgebildet ist, dass das Rollband gegen eine Federkraft der Feder abrollbar ist und mittels der Federkraft der Feder aufrollbar ist. Eine solche Feder sorgt dafür, dass das Abrollen nicht unkontrolliert abläuft und hält das Rollband auf Spannung, so dass es nicht durchhängt. Außerdem sorgt die Feder dafür, dass das Rollband wieder aufgerollt wird, wenn das Aggregat in Richtung Rolle bzw. Befestigungsende bewegt wird und somit der Spalt kleiner wird. Dadurch wird verhindert, dass zu viel Rollband abgerollt ist, dass dann im Weg ist und gegebenenfalls durchhängt. Die Rolle kann auch einen integrierten Federmotor umfassen, so dass die Federkraft einstellbar ist.

Die Rollbandabdeckung kann mindestens ein erstes und ein zweites Rollband und eine erste und eine zweite Rolle umfassen, die jeweils derart ausgebildet und angeordnet sind, dass die Abrollrichtungen der beiden Rollbänder entgegengesetzt zueinander und im Wesentlichen parallel zu einer ersten Richtung verlaufen und dass bei einem Verstellen der Aggregatsposition entlang der ersten Richtung, das erste Rollband auf einer ersten Seite des Aggregats von der ersten Rolle abgerollt wird und das zweite Rollband auf einer zweiten, der ersten Seite gegenüberliegenden, Seite des Aggregats auf die zweite Rolle aufgerollt wird oder umgekehrt.

Das heißt, wird nun das Aggregat seitlich, beispielsweise nach rechts, verschoben, so wird von einer Rolle links von dem Aggregat automatisch Rollband abgerollt und auf der Rolle rechts von dem Aggregat, insbesondere automatisch, Rollband aufgerollt. So bleiben stets die Spalte auf beiden Seiten des Aggregats abgedeckt und ein idealer Schutz wird erreicht. Dies gilt natürlich analog, wenn das Aggregat nach links verschoben oder höhenverstellt wird.

Die Abrollrichtungen des ersten und des zweiten Rollbands kann im Wesentlichen parallel verlaufen und die Rollbandabdeckung kann eine dritte Rolle und ein drittes Rollband aufweisen, die jeweils derart ausgebildet und angeordnet sind, dass eine Abrollrichtung des dritten Rollbands im Wesentlichen parallel zu einer zweiten Richtung senkrecht zu der ersten Richtung verläuft.

Das heißt, dass beispielsweise zusätzlich zu zwei seitlich angeordneten Rollbändern auch noch ein oberhalb oder unterhalb des Aggregats angeordnetes Rollband vorgesehen sein kann oder analog, dass zusätzlich zu einem oberhalb und einem unterhalb des Aggregats angeordnetem Rollband auch seitlich neben dem Aggregat ein Rollband vorgesehen sein kann.

Die Rollbandabdeckung kann eine vierte Rolle und ein viertes Rollband aufweisen, die jeweils derart ausgebildet und angeordnet sind, dass eine Abrollrichtung des vierten Rollbands im Wesentlichen parallel zu der zweiten Richtung und entgegengesetzt zu der Abrollrichtung des dritten Rollbandes verläuft und dass bei einem Verstellen der Aggregatsposition entlang der zweiten Richtung, das dritte Rollband auf einer dritten Seite des Aggregats von der dritten Rolle abgerollt wird und das vierte Rollband auf einer vierten, der dritten Seite gegenüberliegenden, Seite des Aggregats auf die vierte Rolle aufgerollt wird oder umgekehrt.

Das heißt, dass beispielsweise zusätzlich zu zwei seitlich angeordneten Rollbändern und einem oberhalb (oder unterhalb) des Aggregats angeordneten Rollband noch ein unterhalb (oder oberhalb) angeordnetes Rollband vorgesehen sein kann oder analog, dass zusätzlich zu einem oberhalb und einem unterhalb des Aggregats angeordnetem Rollband seitlich neben dem Aggregat an beiden Seiten je ein Rollband vorgesehen sein kann.

Das heißt, dass die Rollbandabdeckung für zwei senkrecht verlaufende Richtungen jeweils zwei Rollbänder mit entgegengesetzten Abrollrichtungen umfassen kann. In einer solchen Konfiguration kann sowohl bei einer Höhenverstellung als auch bei einer seitlichen Verstellung des Aggregats ein zuverlässiger Schutz gewährleistet werden.

Die Rollbandabdeckung kann derart ausgebildet sein, dass das erste Rollband und das zweite Rollband in einer ersten Ebene abgerollt werden und das dritte Rollband und gegebenenfalls das vierte Rollband in einer zweiten Ebene abgerollt werden, wobei die erste Ebene im Wesentlichen parallel und versetzt zur zweiten Ebene verläuft. Das heißt dass, wenn man frontal auf die Verschutzung bzw. das Aggregat schaut, zwei gegenüberliegende Rollbänder vor der bzw. den senkrecht dazu verlaufenden Rollbändern verlaufen. So können sich die Rollbänder überlappen, ohne sich im Weg zu sein, und somit auch die Eckbereiche der Öffnung abdecken.

Insbesondere können sich das erste Rollband und das zweite Rollband im Wesentlichen entlang einer gesamten Breite der Öffnung und das dritte Rollband und gegebenenfalls das vierte Rollband im Wesentlichen entlang einer gesamten Höhe der Öffnung erstrecken. Somit kann sichergestellt werden, dass die gesamte Öffnung abgeschlossen ist.

Besonders im Fall von drei oder vier wie oben beschrieben angeordneten Rollbändern, insbesondere solchen, die sich über die gesamte Breite erstrecken, kann die Rollbandabdeckung derart ausgebildet ist, dass jedes der ersten bis vierten Rollbänder mittels je eines Befestigungsmechanismus, insbesondere werkzeuglos, lösbar an dem Aggregat befestigbar ist, und/oder derart, dass jedes der ersten bis vierten Rollbänder derart am Aggregat anbringbar ist, dass das Aggregat entlang der gesamten Breite des Rollbandes verschiebbar ist.

Insbesondere kann jeweils das bzw. ein Befestigungsende oder die bzw. eine Rolle jedes der ersten bis vierten Rollbänder mittels je eines Befestigungsmechanismus lösbar an dem Aggregat befestigbar sein. Der Befestigungsmechanismus kann dabei insbesondere derart ausgebildet sein, dass eine Befestigung unabhängig von der Aggregatsposition möglich ist. Das heißt, dass der Befestigungsmechanismus insbesondere derart ausgebildet ist, dass er eine Befestigung des Aggregats im Wesentlichen entlang der gesamten Breite des Rollbandes ermöglicht. Denkbar ist beispielsweise eine Befestigung mit einem Steck-Mechanismus, einem Klettverschluss oder mit Druckknöpfen.

Wenn das Rollband, wie oben beschrieben, lösbar am Aggregat befestigbar ist, kann, am Beispiel von vier Rollbändern und einer seitlichen Verschiebung des Aggregats, das obere und untere Rollband vom Aggregat gelöst werden, das Aggregat seitlich verschoben werden und anschließend das obere und untere Rollband wieder befestigt werden. Dies gilt analog für eine Höhenverstellung, bei der dann die seitlichen Rollbänder vorübergehend vom Aggregat gelöst werden.

Wenn das Rollband am Aggregat entlang der gesamten Breite des Rollbandes verschiebbar anbringbar ist, kann auf ein Lösen des Rollbandes vom Aggregat verzichtet werden.

Die Rollbandabdeckung kann derart ausgebildet und angeordnet sein, dass bei einem Verstellen der Aggregatsposition entlang der zweiten Richtung die erste und gegebenenfalls die zweite Rolle bzw. das Befestigungsende des ersten und gegebenenfalls des zweiten Rollbandes im Wesentlichen parallel zu der zweiten Richtung und in die gleiche Richtung wie das Aggregat, insbesondere mechanisch gekoppelt an das Aggregat, verschiebbar sind, insbesondere automatisch verschoben werden.

Alternativ oder zusätzlich kann die Rollbandabdeckung derart ausgebildet und angeordnet sein, dass bei einem Verstellen der Aggregatsposition entlang der ersten Richtung die dritte und gegebenenfalls die vierte Rolle bzw. das Befestigungsende des dritten und gegebenenfalls vierten Rollbandes im Wesentlichen parallel zu der ersten Richtung und in die gleiche Richtung wie das Aggregat, insbesondere mechanisch gekoppelt an das Aggregat, verschoben werden.

Wie in ähnlicher Form oben schon erläutert, kann so sichergestellt werden, dass das Aufrollen und Abrollen zuverlässig funktioniert und dass keine seitlichen Zugkräfte auf das Abrollband wirken.

Es ist denkbar, dass das Rollband eine Zusammensetzung hat, beispielsweise dass es Kettenglieder umfasst, oder auch dass die Rolle und gegebenenfalls ein Rollengehäuse so ausgelegt sind, dass seitliche Zugkräfte in einem bestimmten Maß unproblematisch sind. In diesem Fall ist es durchaus ohne Qualitätseinbußen möglich, auch ein Verschieben des Aggregats senkrecht zur Abrollrichtung, insbesondere in einer seitlichen Richtung, zuzulassen, ohne dabei die Rolle bzw. das Befestigungsende zu verschieben.

Verschiedene der oben beschriebenen Möglichkeiten können auch nach Bedarf kombiniert werden, beispielsweise, zwei Rollbänder, die so breit sind, wie das Aggregat, und zwei senkrecht dazu verlaufende Rollbänder, die so breit sind, wie die Öffnung breit bzw. hoch ist, wobei die zwei Rollbänder, die so breit wie das Aggregat sind, zusammen mit dem Aggregat verschiebbar angeordnet sind, während die Rollbänder, die so breit sind wie die Öffnung, nicht verschiebbar angeordnet sind. So kann die Öffnung ebenfalls vollständig verschlossen werden. Es ist dann auch nicht nötig, dass senkrecht zueinander verlaufende Bänder in versetzten Ebenen verlaufen.

Weitere Merkmale und Vorteile werden nachfolgend anhand der beispielhaften Figuren erläutert. Dabei zeigen:
- Figur 1: eine schematische, nicht maßstabsgetreue Schrägansicht einer ersten Ausführungsform einer Behälterbehandlungsanlage,
- Figur 2: eine schematische, nicht maßstabsgetreue Seitenansicht einer zweiten Ausführungsform einer Behälterbehandlungsanlage und
- Figur 3: eine schematische, nicht maßstabsgetreue Seitenansicht einer dritten Ausführungsform einer Behälterbehandlungsanlage.

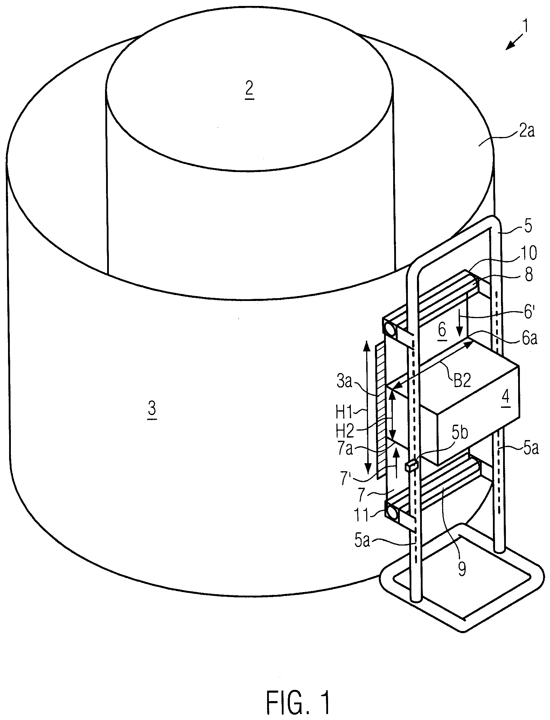

In Figur 1 ist ein Ausführungsbeispiel für eine erfindungsgemäße Behälterbehandlungsanlage 1 gezeigt. Die Behälterbehandlungsanlage umfasst eine Behandlungsmaschine 2 mit einem Maschinenbereich (angedeutet mit dem Bezugszeichen 2a), eine Verschutzung 3 mit einer Öffnung 3a, die den Maschinenbereich zumindest einhaust, und ein Aggregat 4, welches am Umfang des Maschinenbereichs angeordnet ist und durch die Öffnung mit dem Maschinenbereich zusammenarbeitet.

Bei der Behandlungsmaschine kann es sich beispielsweise um einen Etikettierer handeln, also eine Maschine, bei der auf Behälter, die durch den Maschinenbereich transportiert werden, Etiketten aufgebracht werden. Es kann sich aber auch um eine andere Maschine handeln, beispielsweise Direktdruckmaschine.

Bei dem Aggregat kann es sich beispielsweise um eine Behälterausrichtung handeln, die Behälter, die im Maschinenbereich transportiert werden, ausrichtet. Es kann sich jedoch auch um verschiedene andere Aggregate handeln, beispielsweise Inspektionsaggregate, Reinigungsaggregate oder dergleichen. Es ist auch denkbar, dass mehrere Öffnungen vorgesehen sind, in denen jeweils ein Aggregat angeordnet ist.

In diesem Beispiel ist die Verschutzung umfänglich um den Maschinenbereich angeordnet, und zwar um den gesamten Maschinenbereich umlaufend. Dabei können hier nicht gezeigte Öffnungen, durch die die Behälter in den Maschinenbereich hinein und aus dem Maschinenbereich heraus transportiert werden, vorgesehen sein. In dem hier gezeigten Beispiel ist die Maschine nach oben hin nicht durch die Verschutzung begrenzt. Es ist jedoch alternativ auch möglich, dass auch oberhalb der Maschine ein Teil der Verschutzung angeordnet ist. Weiterhin muss die Verschutzung nicht um den gesamten Maschinenbereich umlaufend angeordnet sein, beispielsweise, wenn ein Teil des Maschinenbereichs durch eine Wand oder angrenzende Maschinen begrenzt wird.

Das Aggregat ist hier an einem Gestell 5 höhenverstellbar angebracht. Das Gestell hält das Aggregat und kann entweder, wie hier gezeigt, (im Betriebszustand) im Bereich der Öffnung der Verschutzung aufgestellt sein oder alternativ, beispielsweise an der Verschutzung oder einer Halterung der Verschutzung befestigt sein. Das Gestell weist in diesem Beispiel vertikal angeordnete Schienen 5a auf, entlang derer das Aggregat verschoben werden kann. So kann das Aggregat höhenverstellt werden und somit in verschiedene Aggregatspositionen gebracht werden. Das Aggregat kann beispielsweise mit Arretierungen 5b arretiert werden. Verschiedene andere Mechanismen, die eine Höhenverstellung, insbesondere durch Verschieben, ermöglichen, sind ebenfalls denkbar, beispielsweise Stangen. Hier nicht dargestellt kann optional ein Antrieb vorgesehen sein, der das Aggregat anhebt oder absenkt. Alternativ kann das Verstellen auch manuell erfolgen.

Unabhängig davon, welcher Mechanismus für das Verschieben des Aggregats vorgesehen ist, ist vorzugsweise ein Begrenzungsmechanismus (hier nicht gezeigt) vorgesehen, der die Bewegung des Aggregats nach oben und unten begrenzt. Das können beispielsweise Stopper sein, jedoch sind auch andere Elemente denkbar oder die Form der Stangen oder Schienen selbst kann derart sein dass die Bewegung begrenzt ist. Das Aggregat kann also in einem vorgegebenen Intervall bewegt werden.

Die Öffnung ist hier beispielhaft rechteckig dargestellt und auch das Aggregat ist im Querschnitt rechteckig dargestellt. Verschiedenste andere Formen sind jedoch ebenfalls denkbar. Die Öffnung hat eine Höhe H1 und eine Breite B1, der Querschnitt des Aggregats eine Höhe H2 und eine Breite B2. Im vorliegenden Beispiel ist die Breite der Öffnung B1 nur unwesentlich größer als die Breite B2. Der Grund dafür ist, dass keine seitliche Verstellung der Aggregatsposition vorgesehen ist, so dass die Öffnung nur deshalb etwas breiter sein muss, damit sich das Aggregat in Höhenrichtung bewegen lässt.

Die Höhe H1 der Öffnung ist hingegen deutlich größer als die Höhe H2 des Aggregats. Die Höhe H1 der Öffnung ist in diesem Beispiel so groß, dass das Aggregat in dem vorgegebenen Intervall bewegt werden kann, ohne mit der Verschutzung zu kollidieren.

Somit ist nur ein Teil der Öffnung durch das Aggregat verdeckt und es verbleiben (bei einer etwa mittigen Anordnung des Aggregats) oberhalb und unterhalb des Aggregats Spalte, in denen die Öffnung nicht durch das Aggregat verdeckt ist.

Die Figur zeigt weiterhin eine Rollbandabdeckung, die zwei Rollbänder 6 und 7, zwei Rollen 8 und 9, sowie zwei Gehäuse 10 und 11, in denen die Rollen angeordnet sind, umfasst. Die Gehäuse sind jedoch nur optional vorgesehen. Die erste Rolle 8 und das entsprechende erste Rollband 6 sind oberhalb des Aggregats angeordnet, die zweite Rolle 9 und das entsprechende zweite Rollband 7 sind unterhalb des Aggregats angeordnet. Wie hier zu erkennen ist, sind die Rollbänder im Wesentlichen so breit wie das Aggregat. Es ist jedoch auch denkbar, dass diese eine andere Breite aufweisen, insbesondere etwas breiter sind als das Aggregat, nämlich im Wesentlichen so breit wie die Öffnung.

Es ist jedoch ebenfalls denkbar, eine der Rollen und das entsprechende Rollband wegzulassen, beispielsweise wenn davon ausgegangen wird, dass ein Benutzer unter normalen Umständen oberhalb oder unterhalb des Aggregats aufgrund der Anordnung ohnehin nicht durch die Öffnung greifen kann, so dass dieser Bereich nicht zwangsläufig abgedeckt werden müsste.

In dem vorliegenden Beispiel wird das erste Band 6 in Richtung des Pfeils 6', welcher die Abrollrichtung des ersten Bandes darstellt, von der Rolle 8 abgerollt, wenn eine Zugkraft in Abrollrichtung an dem Band zieht. Das zweite Band 7 wird in Richtung des Pfeils 7', welcher die Abrollrichtung des zweiten Bandes darstellt, von der Rolle 9 abgerollt. Die Abrollrichtungen sind also entgegengesetzt und im Wesentlichen parallel.

Die beiden Rollen können jeweils eine Feder (hier nicht gezeigt) umfassen, die so ausgebildet ist, dass das Abrollen des jeweiligen Bandes gegen die Zugkraft der Feder erfolgt. Das heißt, dass durch die Feder eine Kraft ausgeübt und geeignet übertragen wird, so dass ohne sonstige Krafteinwirkung das Band auf die Rolle aufgerollt wird. Es ist jedoch auch denkbar, dass das Aufrollen anderweitig bewirkt wird, beispielsweise mittels einer Kurbel.

Das Rollband ist vorzugsweise viereckig, im vorliegenden Beispiel rechteckig, wobei zwei Kanten bzw. Enden des Rollbandes im Wesentlichen parallel zur Rollachse der Rolle verlaufen. Eines dieser Enden ist dabei an der Rolle angebracht, das andere, welches als Befestigungsende bezeichnet und in den Figuren mit den Bezugszeichen 6a und 7a gekennzeichnet ist, kann zum Einbau an einem Bauelement befestigt werden.

Das Befestigungsende des Rollbandes kann optional eine Verstärkung, beispielsweise eine Stange, umfassen, die parallel zum Befestigungsende verläuft und das Rollband somit in einer seitlichen Richtung stabilisiert. Auch entlang der Länge des Rollbandes können solche Verstärkungen vorgesehen sein. Solche Verstärkungen können, je nach Material des Rollbandes und Länge und Breite des Rollbandes, die Anordnung stabilisieren.

Im vorliegenden Beispiel sind die beiden Rollen an dem Gestell jeweils oberhalb bzw. unterhalb des Aggregats befestigt. Die Befestigung ist in diesem Fall derart ausgebildet, dass die Rollen sich weder entlang der Abrollrichtung, noch entlang anderer Richtungen verschieben lassen. Wenn die Rollen, wie hier, in einem Gehäuse angeordnet sind, kann die Befestigung der Rollen mittelbar über das Gehäuse erfolgen. Alternativ kann auch eine Lagereinrichtung, auf der die Rollen drehbar gelagert sind, direkt zur Befestigung verwendet werden. Die Befestigung kann auf beliebige Art und Weise erfolgen, beispielsweise durch ein Einschieben, Einhängen oder Andocken an ein Gegenstück, welches Teil des Gestells ist oder an diesem befestigt ist, oder durch Verschrauben, Verkleben, oder Verschweißen. Alternativ können die Rollen jeweils auch an anderen feststehenden Bauteilen befestigt sein, beispielsweise an einem weiteren Gestell, an einem Rahmen, an einem Gehäuse oder an der Verschutzung. Die erste und die zweite Rolle können, müssen jedoch nicht, an demselben feststehenden Bauteil befestigt sein.

In Figur 1 sind die Befestigungsenden der Rollbänder jeweils an dem Aggregat befestigt. Insbesondere sind das Rollband 6 gegenüber der Rolle 8 an der Oberseite des Aggregats und das Rollband 7 gegenüber der Rolle 9 an der Unterseite des Aggregats befestigt. Auch hier sind beliebige Arten der Befestigung denkbar, beispielsweise durch ein Einschieben, Einhängen oder Andocken an ein Gegenstück, welches Teil des Aggregats ist oder an diesem befestigt ist, Verschrauben, Verkleben, oder Verschweißen.

Die geeignete Art der Befestigung der Rolle und des Befestigungsendes hängt davon ab, wie das Rollband, das feststehende Bauteil und das Aggregat ausgebildet sind und ob eine dauerhafte Befestigung angestrebt ist oder ein leichtes Austauschen wünschenswert ist.

Wie in der Figur erkennbar ist, ist die Anordnung der Rolle und des Befestigungsendes insbesondere derart gewählt, dass das Befestigungsende nicht seitlich (also parallel zu der Drehachse der Rolle) versetzt zu der Rolle ist. Das ermöglicht unabhängig vom Material des Rollbandes ein problemloses Auf- und Abrollen und dass das Rollband gleichmäßig gespannt ist. Grundsätzlich wäre auch denkbar, dass ein seitlicher Versatz vorliegt. Ein problemloses Auf- und Abrollen könnte dann beispielsweise durch geeignete Wahl des Materials des Rollbandes und/oder der Ausgestaltung der Rolle sichergestellt werden.

Auch wenn in diesem Beispiel die beiden Rollen an feststehenden Bauteilen und die Befestigungsenden der Rollbänder jeweils an dem Aggregat befestigt sind, ist es ebenfalls denkbar, dass dies vertauscht ist. Das heißt, dass auch die erste und/oder die zweite Rolle an dem Aggregat und dann jeweils das erste und/oder zweite Befestigungsende an dem bzw. den feststehenden Bauteilen befestigt sein können.

Das Rollband kann optional entlang dem Befestigungsende beim Abrollen entlang der Abrollrichtung seitlich geführt sein. Dies kann für zusätzliche Stabilität sorgen, insbesondere wenn das Rollband geringe Eigenstabilität aufweist.

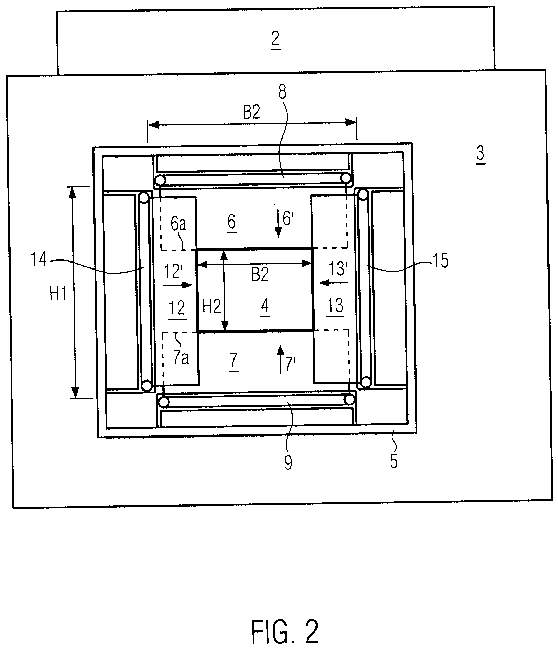

In dem in Figur 2 gezeigten Ausführungsbeispiel werden soweit nicht anders beschrieben, die gleichen Bezugszeichen verwendet wie im ersten Ausführungsbeispiel. Außerdem werden die Elemente und Merkmale, die oben schon beschrieben wurden, nicht erneut beschrieben und können hier analog Anwendung finden.

Im Vergleich zu dem im Zusammenhang mit Figur 1 beschriebenem Beispiel, ist in dem Beispiel, das in Figur 2 gezeigt ist, zusätzlich zu einer Höhenverstellung der Aggregatsposition auch eine seitliche Verstellung der Aggregatsposition vorgesehen. Die Befestigung der Rollbandabdeckung kann analog wie im Zusammenhang mit Figur 1 erfolgen.

Als Mechanismus für die seitliche Verstellung kommen im Prinzip die gleichen Mechanismen wie für die oben beschriebene Höhenverstellung in Betracht. Dabei können in der Behälterbehandlungsanlage für die Höhenverstellung und die seitliche Verstellung die gleichen oder verschiedene Mechanismen gewählt werden. Wie auch bei der Höhenverstellung ist auch bei der seitlichen Verstellung die seitliche Bewegung auf ein vorgegebenes Intervall begrenzt.

Die Breite der Öffnung B1 ist in diesem Beispiel so groß, dass das Aggregat seitlich in dem vorgegebenen Intervall bewegt werden kann, ohne mit der Verschutzung zu kollidieren.

Somit verbleiben (bei einer etwa mittigen Anordnung des Aggregats) neben den oberhalb und unterhalb des Aggregats angeordneten Spalte auch rechts und links des Aggregats Spalte, in denen die Öffnung nicht durch das Aggregat verdeckt ist.

In dem hier gezeigten Beispiel umfasst die Rollbandabdeckung zusätzlich zu den oberhalb und unterhalb des Aggregats vorgesehenen Rollen und Rollbändern auch noch ein drittes Rollband 12 und ein viertes Rollband 13 mit Abrollrichtungen 12' und 13' und eine dritte Rolle 14 und eine vierte Rolle 15, wobei das dritte Rollband und die dritte Rolle links und das vierte Rollband und die vierte Rolle rechts von dem Aggregat angeordnet sind. Auch hier sind die dritte und vierte Rolle an einem feststehenden Bauteil, hier beispielhaft an dem Gestell, angebracht und die Befestigungsenden der dritten und vierten Rollbänder an dem Aggregat. Analog zum ersten Ausführungsbeispiel ist es jedoch ebenfalls möglich, dass mindestens eines der Befestigungsenden an einem feststehenden Bauteil angebracht ist und die jeweilige Rolle an dem Aggregat.

Das erste und das zweite Rollband haben jeweils eine Breite, die im Wesentlichen der Breite der Öffnung entspricht und das dritte und vierte Rollband haben eine Breite, die im Wesentlichen der Höhe der Öffnung entspricht.

Jedes der Rollbänder kann optional entlang dem Befestigungsende eine Verstärkung (beispielsweise eine Stange) aufweisen und/oder beim Abrollen entlang der Abrollrichtung seitlich geführt sein (beispielsweise in Schienen). Da das Rollband in der vorliegenden Ausführungsform nicht über seine gesamte Breite durch das Aggregat gestützt ist, kann dies, insbesondere bei einer nicht ausreichenden Eigenstabilität der Bandes, eine Stabilisierung ermöglichen und ein Abknicken oder Durchhängen des Rollbandes verhindern.

In der in Figur 2 gezeigten Ausführungsform verlaufen das erste und das zweite Rollband in einer Ebene vor und im Wesentlichen parallel zu einer Ebene, in der das dritte und das vierte Rollband verlaufen. Das heißt, dass die Rollbänder sind versetzt zueinander angeordnet sind, wobei der Versatz in der Figur aufgrund der Ansicht nicht erkennbar ist. So können sich also die senkrecht zueinander angeordneten Rollbänder überlappen, ohne sich im Weg zu sein, und somit auch die Eckbereiche der Öffnung abdecken. Die Öffnung ist hier komplett verschlossen.

Die Rollbänder, in diesem Fall insbesondere die Befestigungsenden, sind jeweils lösbar mit einem Befestigungsmechanismus (hier nicht gezeigt) am Aggregat befestigt. Der Befestigungsmechanismus ist derart ausgebildet, dass eine Befestigung unabhängig von der Aggregatsposition möglich ist. Das heißt, dass der Befestigungsmechanismus insbesondere derart ausgebildet ist, dass er eine Befestigung des Aggregats entlang der gesamten Breite des Rollbandes ermöglicht.

Beispielsweise können entlang dem Befestigungsende Elemente für einen Steckmechanismus oder Druckknöpfe angeordnet sein, wobei dann am Aggregat die entsprechenden Gegenstücke zu den Elementen bzw. Druckknöpfen befestigt sind. Alternative Befestigungsmechanismen, beispielsweise Klettverschlüsse, sind ebenfalls denkbar.

Wenn das Rollband, wie oben beschrieben, lösbar am Aggregat befestigbar ist, kann, am Beispiel von vier Rollbändern und einer seitlichen Verschiebung des Aggregats, das obere und untere Rollband vom Aggregat gelöst werden, das Aggregat seitlich verschoben werden und anschließend das obere und untere Rollband wieder befestigt werden. Dies gilt analog für eine Höhenverstellung, bei der dann die seitlichen Rollbänder vorübergehend vom Aggregat gelöst werden.

Alternativ oder zusätzlich kann in einer Konfiguration mit vier wie in Figur 2 angeordneten Rolländern auch eine Anbringung der Rollbänder am Aggregat so erfolgen, dass das Aggregat entlang der gesamten Breite des Rollbandes verschiebbar ist. Zum Beispiel kann das Aggregat eine Schiene aufweisen, in der das Befestigungsende aufgenommen ist, so dass das Aggregat entlang des Befestigungsendes verschoben werden kann. So könnte dann eine Verstellung seitlich und vertikal erfolgen, ohne dass die Rollbänder vom Aggregat gelöst werden müssen.

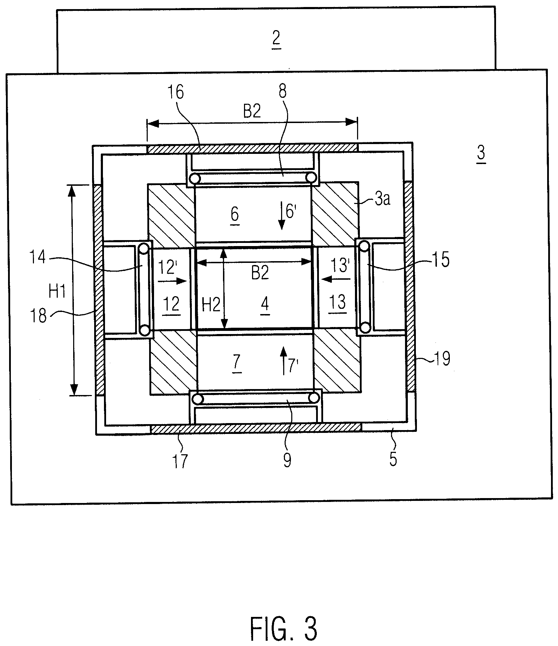

In Figur 3 ist eine weitere Ausführungsform gezeigt, die der Ausführungsform in Figur 2 ähnelt und ebenfalls vier Rollbänder aufweist. In diesem Beispiel erstrecken sich die Bänder jedoch nicht über die gesamte Breite bzw. Höhe der Öffnung, sondern sind lediglich so breit bzw. hoch wie das Aggregat. Die Rollbänder müssen hier nicht versetzt zueinander angeordnet sein.

In diesem Beispiel ist zudem jede der Rollen bezüglich der Rollachse der jeweiligen Rolle seitlich verschiebbar angeordnet. Dazu können beispielsweise, wie hier gezeigt, Schienen 16, 17, 18, und 19, an den feststehenden Bauteilen, hier also dem Gestell, vorgesehen sein. Die Rollen können jedoch auch anderweitig verschiebbar angeordnet sein. Ein Verschieben der Rollen parallel zu der Abrollrichtung des jeweiligen Rollbandes ist, hier aufgrund der Schienenanordnung, im Wesentlichen unterbunden. Für jede der Rollen kann eine hier nicht gezeigte Arretierung vorgesehen sein. Wenn nicht die Rollen sondern die Befestigungsenden an den feststehenden Bauteilen angebracht sind, ist es natürlich analog auch möglich, dass diese seitlich verschiebbar angebracht sind, beispielsweise auch mittels Schienen.

Durch eine solche Anordnung wird ermöglicht, bei einer Höhenverstellung des Aggregats die seitlichen Rollen entsprechend in der Höhe zu verstellen oder bei einer seitlichen Verstellung des Aggregats die oberen und unteren Rollen entsprechend seitlich zu verstellen. Dies kann beispielsweise manuell erfolgen. Alternativ kann eine mechanische Koppelung mit dem Aggregat vorliegen oder ein Antrieb, beispielsweise ein Elektromotor oder Stellmotor, kann das Verstellen durchführen, gegebenenfalls mit Hilfe einer Steuereinrichtung.

Es ist jedoch nicht zwangsläufig erforderlich, die Rollen verschiebbar anzuordnen, insbesondere, wenn die Bewegungen des Aggregats relativ klein sind und/oder die Ausgestaltung der Rollen oder der Rollbänder geeignet gewählt sind, wie oben bereits erläutert.

Verschiedene der oben beschriebenen Möglichkeiten können auch nach Bedarf kombiniert werden, beispielsweise, zwei Rollbänder, die so breit sind, wie das Aggregat, und zwei senkrecht dazu verlaufende Rollbänder, die so breit sind, wie die Öffnung breit bzw. hoch ist, wobei die zwei Rollbänder, die so breit wie das Aggregat sind, zusammen mit dem Aggregat verschiebbar angeordnet sind, während die Rollbänder, die so breit sind wie die Öffnung, nicht verschiebbar angeordnet sind. So kann die Öffnung ebenfalls vollständig verschlossen werden. Es ist dann auch nicht nötig, dass senkrecht zueinander verlaufende Bänder in versetzten Ebenen verlaufen. Beispielweise könnten die vertikal verlaufenden Rollbänder so breit wie das Aggregat und seitlich verschiebbar angeordnet sein und die Breite der seitlich verlaufenden Rollbänder könnten der Höhe der Öffnung entsprechen.

Es versteht sich, dass allgemein die in den zuvor beschriebenen Ausführungsbeispielen genannten Merkmale nicht auf diese speziellen Kombinationen beschränkt sind und auch in beliebigen anderen Kombinationen möglich sind.

## Patentansprüche

1. Behälterbehandlungsanlage (1) umfassend
einen Maschinenbereich (2a), der zumindest teilweise durch eine Verschutzung (3) eingehaust ist,
ein durch eine Öffnung (3a) in der Verschutzung (3) hindurch mit dem Maschinenbereich (2a) zusammenarbeitendes Aggregat (4), wobei die Aggregatsposition gegenüber dem Maschinenbereich (2a) höhenverstellbar und/oder seitlich verstellbar ist, und
eine Rollbandabdeckung umfassend mindestens ein Rollband (6, 7, 12, 13), mit dem die Öffnung (3a) abdeckbar ist, wobei, die Rollbandabdeckung eine Rolle (8, 9, 14, 15) umfasst, auf der zumindest ein Teil des Rollbandes (6, 7, 12, 13) aufgerollt ist, **dadurch gekennzeichnet, dass** ein Befestigungsende (6a, 7a) des Rollbandes (6, 7, 12, 13) an dem Aggregat (4) befestigt ist und die Rolle (8, 9, 14, 15) bezüglich einer Abrollrichtung (6', 7', 12', 13') des Rollbandes (6, 7, 12, 13) ortsfest an einem feststehenden Bauteil (5) angebracht ist, derart, dass bei einem Vergrößern des Abstands des Aggregats (4) von der Rolle (8, 9, 14, 15), das Rollband (6, 7, 12, 13) von der Rolle (8, 9, 14, 15) abgerollt wird, oder
die Rolle (8, 9, 14, 15) an dem Aggregat (4) befestigt ist und ein Befestigungsende (6a, 7a) des Rollbandes (6, 7, 12, 13) bezüglich einer Abrollrichtung (6', 7', 12', 13') des Rollbandes (6, 7, 12, 13) ortsfest an einem feststehenden Bauteil (5) angebracht ist, derart, dass bei einem Vergrößern des Abstands des Aggregats (4) von dem Befestigungsende (6a, 7a), das Rollband (6, 7, 12, 13) von der Rolle (8, 9, 14, 15) abgerollt wird.

2. Behälterbehandlungsanlage (1) nach Anspruch 1, wobei die Rollbandabdeckung derart ausgebildet ist, dass die durch das Rollband (6, 7, 12, 13) abgedeckte Fläche durch Aufrollen oder Abrollen des Rollbandes (6, 7, 12, 13) auf bzw. von einer Rolle (8, 9, 14, 15) einstellbar ist.

3. Behälterbehandlungsanlage (1) nach Anspruch 1 oder 2, wobei die Rollbandabdeckung derart ausgebildet ist, dass das Rollband (6, 7, 12, 13) beim Verstellen der Aggregatsposition von einer ersten in eine zweite Aggregatsposition automatisch derart aufgerollt oder abgerollt wird, dass die Fläche eines abgerollten Teils des Rollbandes (6, 7, 12, 13) an die veränderte Fläche der Öffnung (3a) in der zweiten Aggregatsposition angepasst wird.

4. Behälterbehandlungsanlage (1) nach einem der vorangegangenen Ansprüche, wobei die Rolle (8, 9, 14, 15) bzw. das Befestigungsende (6a, 7a) in mindestens einer Richtung senkrecht zu der Abrollrichtung (6', 7', 12', 13'), insbesondere einer seitlichen Richtung, verschiebbar an dem an dem feststehenden Bauteil (5) angebracht ist, insbesondere parallel zu einer Bewegungsrichtung des Aggregats (4).

5. Behälterbehandlungsanlage (1) nach einem der vorangegangenen Ansprüche, wobei die Rollbandabdeckung derart ausgebildet und angeordnet ist, dass die Rolle (8, 9, 14, 15) bzw. das Befestigungsende (6a, 7a) bei Verschieben des Aggregats (4) senkrecht zur Abrollrichtung (6', 7', 12', 13') des Rollbandes (6, 7, 12, 13), insbesondere in der seitlichen Richtung, automatisch in die gleiche Richtung wie das Aggregat (4) verschoben wird, insbesondere durch einen, insbesondere gesteuerten, Antrieb und/oder durch eine mechanische Koppelung.

6. Behälterbehandlungsanlage (1) Anspruch 4 oder 5, wobei ein Arretiermechanismus vorgesehen ist, der zum Arretieren der Rolle (8, 9, 14, 15) bzw. des Befestigungsendes (6a, 7a) in der Richtung senkrecht zu der Abrollrichtung (6', 7', 12', 13'), insbesondere der seitlichen Richtung, ausgebildet ist.

7. Behälterbehandlungsanlage (1) nach einem der vorangegangenen Ansprüche, wobei die Rolle (8, 9, 14, 15) eine Feder aufweist, die derart ausgebildet ist, dass das Rollband (6, 7, 12, 13) gegen eine Federkraft der Feder abrollbar ist und mittels der Federkraft der Feder aufrollbar ist.

8. Behälterbehandlungsanlage (1) nach einem der vorangegangenen Ansprüche, wobei die Rollbandabdeckung mindestens ein erstes und ein zweites Rollband (6, 7, 12, 13) und eine erste und eine zweite Rolle (8, 9, 14, 15) umfasst, die jeweils derart ausgebildet und angeordnet sind, dass die Abrollrichtungen (6', 7', 12', 13') der beiden Rollbänder entgegengesetzt zueinander und im Wesentlichen parallel zu einer ersten Richtung verlaufen und dass bei einem Verstellen der Aggregatsposition entlang der ersten Richtung, das erste Rollband (6, 7, 12, 13) auf einer ersten Seite des Aggregats (4) von der ersten Rolle (8, 9, 14, 15) abgerollt wird und das zweite Rollband (6, 7, 12, 13) auf einer zweiten, der ersten Seite gegenüberliegenden, Seite des Aggregats (4) auf die zweite Rolle (8, 9, 14, 15) aufgerollt wird oder umgekehrt.

9. Behälterbehandlungsanlage (1) nach Anspruch 8, wobei die Abrollrichtungen (6', 7', 12', 13') des ersten und des zweiten Rollbandes (6, 7, 12, 13) im Wesentlichen parallel verlaufen und wobei die Rollbandabdeckung eine dritte Rolle (8, 9, 14, 15) und ein drittes Rollband (6, 7, 12, 13) aufweist, die jeweils derart ausgebildet und angeordnet sind, dass eine Abrollrichtung (6', 7', 12', 13') des dritten Rollbandes (6, 7, 12, 13) im Wesentlichen parallel zu einer zweiten Richtung senkrecht zu der ersten Richtung verläuft.

10. Behälterbehandlungsanlage (1) nach Anspruch 9, wobei die Rollbandabdeckung eine vierte Rolle (8, 9, 14, 15) und ein viertes Rollband (6, 7, 12, 13) aufweist, die jeweils derart ausgebildet und angeordnet sind, dass eine Abrollrichtung (6', 7', 12', 13') des vierten Rollbandes (6, 7, 12, 13) im Wesentlichen parallel zu der zweiten Richtung und entgegengesetzt zu der Abrollrichtung (6', 7', 12', 13') des dritten Rollbandes (6, 7, 12, 13) verläuft und dass bei einem Verstellen der Aggregatsposition entlang der zweiten Richtung, das dritte Rollband (6, 7, 12, 13) auf einer dritten Seite des Aggregats (4) von der dritten Rolle (8, 9, 14, 15) abgerollt wird und das vierte Rollband (6, 7, 12, 13) auf einer vierten, der dritten Seite gegenüberliegenden, Seite des Aggregats (4) auf die vierte Rolle (8, 9, 14, 15) aufgerollt wird oder umgekehrt.

11. Behälterbehandlungsanlage (1) nach Anspruch 9 oder 10, wobei die Rollbandabdeckung derart ausgebildet ist, dass das erste Rollband (6, 7, 12, 13) und das zweite Rollband (6, 7, 12, 13) in einer ersten Ebene abgerollt werden und das dritte Rollband (6, 7, 12, 13) und gegebenenfalls das vierte Rollband in einer zweiten Ebene abgerollt werden, wobei die erste Ebene im Wesentlichen parallel und versetzt zur zweiten Ebene verläuft, wobei sich insbesondere das erste Rollband (6, 7, 12, 13) und das zweite Rollband (6, 7, 12, 13) im Wesentlichen entlang einer gesamten Breite der Öffnung (3a) und das dritte Rollband (6, 7, 12, 13) und gegebenenfalls das vierte Rollband (6, 7, 12, 13) im Wesentlichen entlang einer gesamten Höhe der Öffnung (3a) erstrecken.

12. Behälterbehandlungsanlage (1) nach Anspruch 11, wobei die Rollbandabdeckung derart ausgebildet ist, dass jedes der ersten bis vierten Rollbänder (6, 7, 12, 13) mittels je eines Befestigungsmechanismus lösbar an dem Aggregat (4) befestigbar ist, und/oder derart, dass jedes der ersten bis vierten Rollbänder (6, 7, 12, 13) derart am Aggregat (4) anbringbar ist, dass das Aggregat (4) im Wesentlichen entlang der gesamten Breite des Rollbandes (6, 7, 12, 13) verschiebbar ist.

13. Behälterbehandlungsanlage (1) nach einem der Ansprüche 9 bis 12, wobei die Rollbandabdeckung derart ausgebildet und angeordnet ist, dass bei einem Verstellen der Aggregatsposition entlang der zweiten Richtung die erste und gegebenenfalls die zweite Rolle (8, 9, 14, 15) bzw. ein Befestigungsende (6a, 7a) des ersten und gegebenenfalls des zweiten Rollbandes (6, 7, 12, 13) im Wesentlichen parallel zu der zweiten Richtung und in die gleiche Richtung wie das Aggregat (4), insbesondere mechanisch gekoppelt an das Aggregat (4), verschiebbar sind, insbesondere automatisch verschoben werden.

14. Behälterbehandlungsanlage (1) nach einem der Ansprüche 9 bis 13, wobei die Rollbandabdeckung derart ausgebildet und angeordnet ist, dass bei einem Verstellen der Aggregatsposition entlang der ersten Richtung die dritte und gegebenenfalls die vierte Rolle (8, 9, 14, 15) bzw. ein Befestigungsende (6a, 7a) des dritten und gegebenenfalls des vierten Rollbandes (6, 7, 12, 13) im Wesentlichen parallel zu der ersten Richtung und in die gleiche Richtung wie das Aggregat (4), insbesondere mechanisch gekoppelt an das Aggregat (4), verschiebbar sind, insbesondere automatisch verschoben werden.

## Claims

1. Container treatment assembly (1) comprising
a machine region (2a) which is at least partially enclosed by a guard (3), and
a unit (4) cooperating with the machine region (2a) through an opening (3a) in the guard (3), wherein the unit position is height-adjustable and/or laterally adjustable relative to the machine region (2a), and
a rolling belt cover comprising at least one rolling belt (6, 7, 12, 13) with which the opening (3a) can be covered,
wherein the rolling belt cover comprises a roller (8, 9, 14, 15) on which at least a part of the rolling belt (6, 7, 12, 13) is rolled up, **characterized in**
**that** a fastening end (6a, 7a) of the rolling belt (6, 7, 12, 13) is fastened to the unit (4) and the roller (8, 9, 14, 15) is fixedly attached to a stationary component (5) with respect to an unrolling direction (6', 7', 12', 13') of the rolling belt (6, 7, 12, 13) in such a way that, when the distance of the unit (4) from the roller (8, 9, 14, 15) increases, the rolling belt (6, 7, 12, 13) is unrolled from the roller (8, 9, 14, 15), or
the roller (8, 9, 14, 15) is fastened to the unit (4) and a fastening end (6a, 7a) of the rolling belt (6, 7, 12, 13) is fixedly attached to a stationary component (5) with respect to an unrolling direction (6', 7', 12', 13') of the rolling belt (6, 7, 12, 13) in such a way that, when the distance of the unit (4) from the fastening end (6a, 7a) increases, the rolling belt (6, 7, 12, 13) is unrolled from the roller (8, 9, 14, 15).

2. Container treatment assembly (1) according to claim 1, wherein the rolling belt cover is designed in such a way that the surface covered by the rolling belt (6, 7, 12, 13) can be adjusted by rolling up or unrolling the rolling belt (6, 7, 12, 13) onto or from a roller (8, 9, 14, 15).

3. Container treatment assembly (1) according to claim 1 or 2, wherein the rolling belt cover is designed in such a way that the rolling belt (6, 7, 12, 13) is automatically rolled up or unrolled when the unit position is adjusted from a first to a second unit position in such a way that the surface of an unrolled part of the rolling belt (6, 7, 12, 13) is adapted to the changed surface of the opening (3a) in the second unit position.

4. Container treatment assembly (1) according to one of the preceding claims, wherein the roller (8, 9, 14, 15) or the fastening end (6a, 7a) is mounted in at least one direction perpendicular to the unrolling direction (6', 7', 12', 13'), in particular a lateral direction, to be displaceable on the fixed component (5), in particular parallel to a movement direction of the unit (4).

5. Container treatment assembly (1) according to one of the preceding claims, wherein the rolling belt cover is designed and arranged in such a way that the roller (8, 9, 14, 15) or the fastening end (6a, 7a) is automatically displaced in the same direction as the unit (4) when the unit (4) is displaced perpendicularly to the unrolling direction (6', 7', 12', 13') of the rolling belt (6, 7, 12, 13), in particular in the lateral direction, in particular by a drive, in particular a controlled drive, and/or by a mechanical coupling.

6. Container treatment assembly (1) according to claim 4 or 5, wherein a locking mechanism is provided which is designed for locking the roller (8, 9, 14, 15) or the fastening end (6a, 7a) in the direction perpendicular to the unrolling direction (6', 7', 12', 13'), in particular the lateral direction.

7. Container treatment assembly (1) according to one of the preceding claims, wherein the roller (8, 9, 14, 15) comprises a spring which is designed in such a way that the rolling belt (6, 7, 12, 13) can be unrolled against a spring force of the spring and can be rolled up by means of the spring force of the spring.

8. Container treatment assembly (1) according to one of the preceding claims, wherein the rolling belt cover comprises at least a first and a second rolling belt (6, 7, 12, 13) and a first and a second roller (8, 9, 14, 15) which are each designed and arranged such that the unrolling directions (6', 7', 12', 13') of the two rolling belts run opposite to one another and substantially parallel to a first direction, and that, when the aggregate position is adjusted along the first direction, the first rolling belt (6, 7, 12, 13) on a first side of the unit (4) is unrolled from the first roller (8, 9, 14, 15) and the second rolling belt (6, 7, 12, 13) on a second side of the unit (4) opposite the first side is rolled up onto the second roller (8, 9, 14, 15), or vice versa.

9. Container treatment assembly (1) according to claim 8, wherein the unrolling directions (6', 7', 12', 13') of the first and the second rolling belt (6, 7, 12, 13) extend substantially parallel and wherein the rolling belt cover comprises a third roller (8, 9, 14, 15) and a third rolling belt (6, 7, 12, 13) which are each designed and arranged such that an unrolling direction (6', 7', 12', 13') of the third rolling belt (6, 7, 12, 13) extends substantially parallel to a second direction perpendicular to the first direction.

10. Container treatment assembly (1) according to claim 9, wherein the rolling belt cover comprises a fourth roller (8, 9, 14, 15) and a fourth rolling belt (6, 7, 12, 13), each of which is designed and arranged such that an unrolling direction (6', 7', 12', 13') of the fourth rolling belt (6, 7, 12, 13) is substantially parallel to the second direction and opposite to the unrolling direction (6', 7', 12', 13') of the third rolling belt (6, 7, 12, 13) and that, when the unit position is adjusted along the second direction, the third rolling belt (6, 7, 12, 13) on a third side of the unit (4) is unrolled from the third roller (8, 9, 14, 15) and the fourth rolling belt (6, 7, 12, 13) on a fourth side of the unit (4) opposite the third side is rolled up onto the fourth roller (8, 9, 14, 15) or vice versa.

11. Container treatment assembly (1) according to claim 9 or 10, wherein the rolling belt cover is designed such that the first rolling belt (6, 7, 12, 13) and the second rolling belt (6, 7, 12, 13) are unrolled in a first plane and the third rolling belt (6, 7, 12, 13) and optionally the fourth rolling belt are unrolled in a second plane, wherein the first plane is substantially parallel and offset to the second plane, wherein in particular the first rolling belt (6, 7, 12, 13) and the second rolling belt (6, 7, 12, 13) extend substantially along an entire width of the opening (3a) and the third rolling belt (6, 7, 12, 13) and optionally the fourth rolling belt (6, 7, 12, 13) extend substantially along an entire height of the opening (3a).

12. Container treatment assembly (1) according to claim 11, wherein the rolling belt cover is designed in such a way that each of the first to fourth rolling belts (6, 7, 12, 13) can be detachably fastened to the unit (4) by means of a respective fastening mechanism, and/or in such a way that each of the first to fourth rolling belts (6, 7, 12, 13) can be attached to the unit (4) in such a way that the unit (4) can be displaced substantially along the entire width of the rolling belt (6, 7, 12, 13).

13. Container treatment assembly (1) according to one of claims 9 to 12, wherein the rolling belt cover is designed and arranged in such a way that, when the unit position is adjusted along the second direction, the first and optionally the second roller (8, 9, 14, 15) or a fastening end (6a, 7a) of the first and optionally the second rolling belt (6, 7, 12, 13) are displaceable substantially parallel to the second direction and in the same direction as the unit (4), in particular mechanically coupled to the unit (4), in particular are displaced automatically.

14. Container treatment assembly (1) according to one of claims 9 to 13, wherein the rolling belt cover is designed and arranged in such a way that, when the unit position is adjusted along the first direction, the third and optionally the fourth roller (8, 9, 14, 15) or a fastening end (6a, 7a) of the third and optionally the fourth rolling belt (6, 7, 12, 13) are displaceable substantially parallel to the first direction and in the same direction as the unit (4), in particular mechanically coupled to the unit (4), in particular are displaced automatically.

## Revendications

1. Installation de traitement de contenants (1) comprenant
une zone-machine (2a), qui est au moins partiellement capotée par un capotage de protection (3),
un appareillage (4) interagissant avec la zone-machine (2a) au travers d'une ouverture (3a) dans le capotage de protection (3), la position de l'appareillage par rapport à la zone-machine (2a) étant réglable en hauteur et/ou réglable latéralement, et
un système d'occultation par bande roulante comprenant au moins une bande roulante (6, 7, 12, 13), à l'aide duquel il est possible d'occulter l'ouverture (3a), installation
dans laquelle le système d'occultation à bande roulante comprend un rouleau d'enroulement (8, 9, 14, 15) sur lequel est enroulé au moins une partie de la bande roulante (6, 7, 12, 13),
**caractérisée**
**en ce qu'**une extrémité de fixation (6a, 7a) de la bande roulante (6, 7, 12, 13) est fixée à l'appareillage (4), et le rouleau d'enroulement (8, 9, 14, 15), en relation avec une direction de déroulement (6', 7', 12', 13') de la bande roulante (6, 7, 12, 13), est monté en position fixe sur une pièce fixe (5) de manière telle, que lors d'un agrandissement de la distance de l'appareillage (4) au rouleau d'enroulement (8, 9, 14, 15), la bande roulante (6, 7, 12, 13) soit déroulée du rouleau d'enroulement (8, 9, 14, 15), ou bien
le rouleau d'enroulement (8, 9, 14, 15) est fixé à l'appareillage (4), et une extrémité de fixation (6a, 7a) de la bande roulante (6, 7, 12, 13), en relation avec une direction de déroulement (6', 7', 12', 13') de la bande roulante (6, 7, 12, 13), est montée en position fixe sur une pièce fixe (5) de manière telle, que lors d'un agrandissement de la distance de l'appareillage (4) à l'extrémité de fixation (6a, 7a), la bande roulante (6, 7, 12, 13) soit déroulée du rouleau d'enroulement (8, 9, 14, 15)

2. Installation de traitement de contenants (1) selon la revendication 1, dans laquelle le système d'occultation à bande roulante est réalisé de manière telle, que la surface recouverte ou occultée par la bande roulante (6, 7, 12, 13), soit réglable par enroulement ou déroulement de la bande roulante (6, 7, 12, 13) sur ou du rouleau d'enroulement (8, 9, 14, 15).

3. Installation de traitement de contenants (1) selon la revendication 1 ou la revendication 2, dans laquelle le système d'occultation à bande roulante est réalisé de manière telle, que la bande roulante (6, 7, 12, 13), lors du réglage de la position de l'appareillage d'une première position de l'appareillage à une deuxième position de l'appareillage, soit enroulée ou déroulée automatiquement de façon à ce que la surface d'une partie déroulée de la bande roulante (6, 7, 12, 13) soit adaptée à la surface modifiée de l'ouverture (3a) dans la deuxième position de l'appareillage.

4. Installation de traitement de contenants (1) selon l'une des revendications précédentes, dans laquelle le rouleau d'enroulement (8, 9, 14, 15) ou respectivement l'extrémité de fixation (6a, 7a) est monté (e) sur la pièce fixe (5) de manière à pouvoir coulisser dans au moins une direction perpendiculaire à la direction de déroulement (6', 7', 12', 13'), notamment une direction latérale, notamment parallèlement à une direction de mouvement de déplacement de l'appareillage (4).

5. Installation de traitement de contenants (1) selon l'une des revendications précédentes, dans laquelle le système d'occultation à bande roulante est réalisé et agencé de manière telle, que le rouleau d'enroulement (8, 9, 14, 15) ou respectivement l'extrémité de fixation (6a, 7a), lors du déplacement de coulissement de l'appareillage (4) perpendiculairement à la direction de déroulement (6', 7', 12', 13') de la bande roulante (6, 7, 12, 13), notamment dans la direction latérale, soit déplacé(e) automatiquement dans la même direction que l'appareillage (4), notamment par un entraînement, en particulier commandé, et/ou par un couplage mécanique.

6. Installation de traitement de contenants (1) selon la revendication 4 ou la revendication 5, dans laquelle il est prévu un mécanisme d'arrêt, qui est conçu pour arrêter le rouleau d'enroulement (8, 9, 14, 15) ou respectivement l'extrémité de fixation (6a, 7a), dans la direction perpendiculaire à la direction de déroulement (6', 7', 12', 13'), notamment la direction latérale.

7. Installation de traitement de contenants (1) selon l'une des revendications précédentes, dans laquelle le rouleau d'enroulement (8, 9, 14, 15) comprend un ressort qui est réalisé de manière telle, que la bande roulante (6, 7, 12, 13) puisse être déroulée à l'encontre d'une force de ressort dudit ressort, et être enroulée au moyen de la force de ressort dudit ressort.

8. Installation de traitement de contenants (1) selon l'une des revendications précédentes, dans laquelle le système d'occultation à bande roulante comprend au moins une première et une deuxième bande roulante (6, 7, 12, 13) et un premier et un deuxième rouleau d'enroulement (8, 9, 14, 15), qui sont conçus et agencés de manière telle, que les directions de déroulement (6', 7', 12', 13') des deux bandes roulantes s'étendent de manière mutuellement opposée et sensiblement parallèlement à une première direction, et que lors d'un déplacement de réglage de la position de l'appareillage le long de ladite première direction, la première bande roulante (6, 7, 12, 13) soit, sur un premier côté de l'appareil (4), déroulée du premier rouleau d'enroulement (8, 9, 14, 15), et la deuxième bande roulante (6, 7, 12, 13) soit, sur un deuxième côté de l'appareillage (4), opposé au premier côté, enroulée sur le deuxième rouleau d'enroulement (8, 9, 14, 15), ou inversement.

9. Installation de traitement de contenants (1) selon la revendication 8, dans laquelle les directions de déroulement (6', 7', 12', 13') de la première et de la deuxième bande roulante (6, 7, 12, 13) s'étendent sensiblement de manière parallèle, et dans laquelle le système d'occultation à bande roulante comprend un troisième rouleau d'enroulement (8, 9, 14, 15) et une troisième bande roulante (6, 7, 12, 13), qui sont respectivement conçus et agencés de manière telle, qu'une direction de déroulement (6', 7', 12', 13') de la troisième bande roulante (6, 7, 12, 13) s'étende sensiblement de manière parallèle à une deuxième direction perpendiculaire à la première direction.

10. Installation de traitement de contenants (1) selon la revendication 9, dans laquelle le système d'occultation à bande roulante comprend un quatrième rouleau d'enroulement (8, 9, 14, 15) et une quatrième bande roulante (6, 7, 12, 13), qui sont respectivement conçus et agencés de manière telle, qu'une direction de déroulement (6', 7', 12', 13') de la quatrième bande roulante (6, 7, 12, 13) s'étende sensiblement de manière parallèle à ladite deuxième direction et de manière opposée à la direction de déroulement (6', 7', 12', 13') de la troisième bande roulante (6, 7, 12, 13), et que, dans le cas d'un déplacement de réglage de la position de l'appareillage le long de la deuxième direction, la troisième bande roulante (6, 7, 12, 13), sur un troisième côté de l'appareil (4), soit déroulée du troisième rouleau d'enroulement (8, 9, 14, 15), et la quatrième bande roulante (6, 7, 12, 13), sur un quatrième côté de l'appareillage (4) opposé au troisième côté, soit enroulée sur le quatrième rouleau d'enroulement (8, 9, 14, 15), ou inversement.

11. Installation de traitement de contenants (1) selon la revendication 9 ou la revendication 10, dans laquelle le système d'occultation à bande roulante est réalisé de manière telle, que la première bande roulante (6, 7, 12, 13) et la deuxième bande roulante (6, 7, 12, 13) soient déroulées dans un premier plan, et la troisième bande roulante (6, 7, 12, 13) et, le cas échant, la quatrième bande roulante soient déroulées dans un deuxième plan, le premier plan s'étendant sensiblement de manière parallèle au deuxième plan et de façon décalée par rapport à celui-ci, et dans laquelle notamment la première bande roulante (6, 7, 12, 13) et la deuxième bande roulante (6, 7, 12, 13) s'étendent sensiblement le long d'une largeur totale de l'ouverture (3a), et la troisième bande roulante (6, 7, 12, 13) et, le cas échéant, la quatrième bande roulante (6, 7, 12, 13) s'étendent sensiblement le long d'une hauteur totale de l'ouverture (3a).

12. Installation de traitement de contenants (1) selon la revendication 11, dans laquelle le système d'occultation à bande roulante est conçu de manière telle, que chacune des première à la quatrième bandes roulantes (6, 7, 12, 13) puisse être fixée de manière amovible à l'appareillage (4), chacune respectivement au moyen d'un mécanisme de fixation, et/ou de manière telle, que chacune des première à la quatrième bandes roulantes (6, 7, 12, 13) puisse être montée sur l'appareillage (4) de façon à ce que l'appareil (4) puisse coulisser sensiblement le long de la totalité de la largeur de la bande roulante (6, 7, 12, 13).

13. Installation de traitement de contenants (1) selon l'une des revendications 9 à 12, dans laquelle le système d'occultation à bande roulante est conçu et agencé de manière telle, que lors d'un déplacement de réglage de la position de l'appareillage le long de la deuxième direction, le premier et, le cas échéant, le deuxième rouleau d'enroulement (8, 9, 14, 15) ou respectivement une extrémité de fixation (6a, 7a) de la première et, le cas échéant, de la deuxième bande roulante (6, 7, 12, 13), puissent coulisser, notamment soient déplacés automatiquement en coulissement, sensiblement de manière parallèle à la deuxième direction et dans la même direction que l'appareillage (4), notamment en étant couplés mécaniquement à l'appareillage (4).

14. Installation de traitement de contenants (1) selon l'une des revendications 9 à 13, dans laquelle le système d'occultation à bande roulante est conçu et agencé de manière telle, que lors d'un déplacement de réglage de la position de l'appareillage le long de la première direction, le troisième et, le cas échéant, le quatrième rouleau d'enroulement (8, 9, 14, 15) ou respectivement une extrémité de fixation (6a, 7a) de la troisième et, le cas échéant, de la quatrième bande roulante (6, 7, 12, 13), puissent coulisser, notamment soient déplacés automatiquement en coulissement, sensiblement de manière parallèle à la première direction et dans la même direction que l'appareillage (4), notamment en étant couplés mécaniquement à l'appareillage (4).
